# EUROPEAN PATENT SPECIFICATION

(11) **EP 0 756 768 B1**
(45) Date of publication and mention of the grant of the patent: **27.05.1998**
(21) Application number: 94926422.0
(22) Date of filing: 26.08.1994
(51) Int. Cl.: H02G 1/02

(54) **REMOTE-CONTROLLED DEVICE FOR ELECTRICAL AND MECHANICAL REINFORCEMENT OF A CASING JOINT AT HIGH LINE VOLTAGE**
FERNGESTEURTE VORRICHTUNG ZUR ELEKTRISCHEN UND MECHANISCHEN VERSTÄRKUNG EINES MANSCHETTENVERBINDERS IN EINER HOCHSPANNUNGSLEITUNG
DISPOSITIF A COMMANDE A DISTANCE POUR LE RENFORCEMENT ELECTRIQUE ET MECANIQUE D'UN RACCORD A MANCHON DANS UNE LIGNE DE TRANSPORT DE COURANT HAUTE TENSION

(30) Priority: 27.08.1993 SE 9302762
(43) Date of publication of application: 05.02.1997
(73) Proprietor: VATTENFALL AB, S-162 87 Stockholm (SE)
(72) Inventor: SEGERSTRÖM, Bo, Torbjörn, S-640 32 Malmlköping (SE)
(74) Representative: Lundquist, Arne
(86) International application number: PCT/SE94/00783
(87) International publication number: WO 95/06346

(56) References cited:
- DE-B- 2 540 605

## Description

The present invention relates to a method and a device for the automatic completion of a socket joint in a line for electrical high voltage with an additional joint in the form of a shunt.

Lines for the transfer of electrical high voltage must be provided with joints, for manufacturing and transport reasons. Lines with a core of steel, surrounded by aluminum threads have a normal length of 1000- 3000 meters. As the Swedish power supply system for electrical high voltage has an extension of c:a 15000 kilometers and each power line consists of 6 - 9 conduits, this means, that the power supply system contains an appreciable number of joints.

Joints in lines for electrical high voltage in most cases consist of a socket of aluminum, in which the ends of a conduit, that shall be jointed, have been introduced, whereupon the socket has been pressed together under a high hydraulic pressure.

The major part of the Swedish power supply system was built between 1940 and 1960. The great number of joints have thus been exposed, during the last 30 - 40 years, to alternating rain, cold and heat and to a corrosive environment. The exposure has in many cases led to corrosion damages, and thus they cannot safely stand the mechanical load they are designed for, or cannot transfer the intended electrical current with acceptable heat release.

Disasters have occurred when conduits transferring current for 400 kV have fallen down because of joint disruptures, which cause great risks and expensive service interruption for repair of the joint concerned, which has hitherto been performed with more or less manual methods at ground level.

The object of the present invention is thus to provide a method and a device of the art mentioned introductorily, that can be utilized whilst the line concerned is in service, and that is relatively simple to use resp has a simple design, so that the cost for measures at a joint, that needs mechanical and electrical completion is low compared with methods used hitherto.

According to the invention such a device is primarily characterized in that it comprises a first support, adapted to be lifted by a lifting means, such as a crane or a helicopter, further comprising at least one driving wheel to engage the line, a driving means for driving said wheel, the support being provided, with first means for placing at least first and second wedge elements to engage respective ends of said socket joint, the support also comprising second means for placing first and second wedge socket means at least partly surrounding said line, cooperating with respective wedge elements, motor means, at least one traction element being provided to pull together, when acted upon by the motor means, the wedge socket elements with the wedge elements surrounded by them, to be fixed, locking, around the line at each side of the socket joint. The device also comprises communication means for remote control of the driving means, said first and second means and the motor means.

Of course many embodiments are possible within the scope of the invention. Suitably, the support is provided with guide rail means for guiding the device to engagement of said driving wheel with the line. Thereby it is warranted, that the device gets in the correct position upon the line and does not happen to be located e g perpendicularly to same, so that the locating is obstructed and is delayed.

In one advantageous embodiment of the device according to the invention, said motor means is displaceable horizontally along a guide rail fixed to the support, and a bucker means is provided, also displaceable horizontally along said guide rail. With this arrangement, the handling of the device upon the line is facilitated. A remotely controlled locking means, preferably with at least partly electrical function ought to be provided to lock, at a control impulse, the motor means and the bucker means at chosen mutual positions along said guide rail.

To warrant great safety when handling the device according to the invention, first and second position means may be provided, connected to respective lifting points, arrranged to be lifted by said lifting device, preferably via respective line means, the first position means being provided to pull, when its lifting point is pulled, the motor means in the direction from the bucker means, the second position means being provided to pull, when its lifting point is pulled, the bucker means in the direction from the motor means. With this arrangement, that will be described more in detail below, it can be warranted, that the device can be safely placed upon the line, and can be pulled therefrom safely.

The wedge elements and the wedge socket elements cooperating with them can, of course, be formed in many ways, but probably it is suitable to utilize two pairs of each two wedge elements, cooperating with two pairs of corresponding wedge socket elements. The wedge elements shall, like the wedge socket elements in each pair, be formed so that they may be joined, journalled around a hinge parallel to their longitudinal direction. Concerning the wedge elements, this hinge is connected to said traction element or preferably two traction elements, which should be arranged symmetrically at each side of the line.

The invention shall be described more in detail in the following, reference being made to the enclosed schematic figures. Among these
figure 1 shows a side view of a traditional joint at a line for electrical high voltage,
figure 2 a side view of an embodiment of the device according to the invention, with certain details omitted,
figure 3 a side view of a special embodiment of a device according to the invention, also with certain details omitted,
figure 4A a side view of details at a device according to the invention,
figure 4B-D cross sections according to the marks B- B, C- C, D - D in figure 4A,
figure 5A a cross section through a pair of hinged wedge socket elements opened,
figure 5B a cross section through the wedge socket elements, and
figure 6A- C a side view of a pair of wedge elements in three positions at the introduction into the corresponding wedge socket elements.

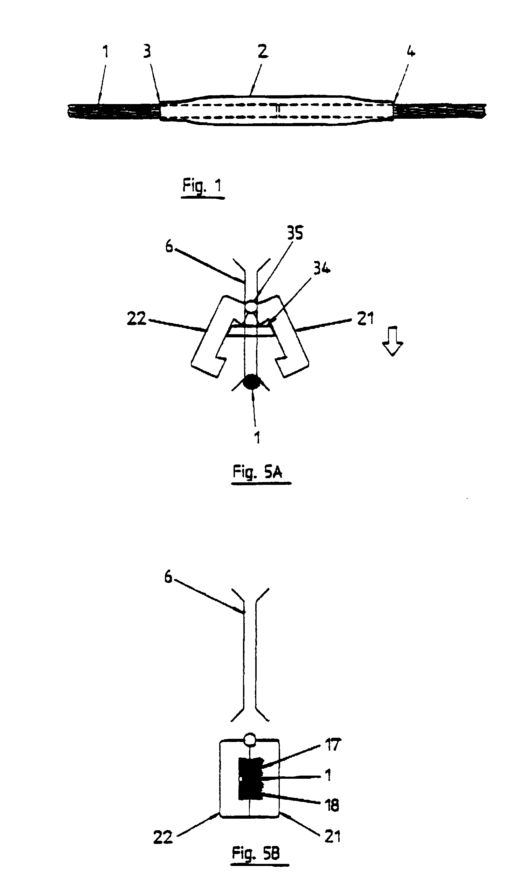

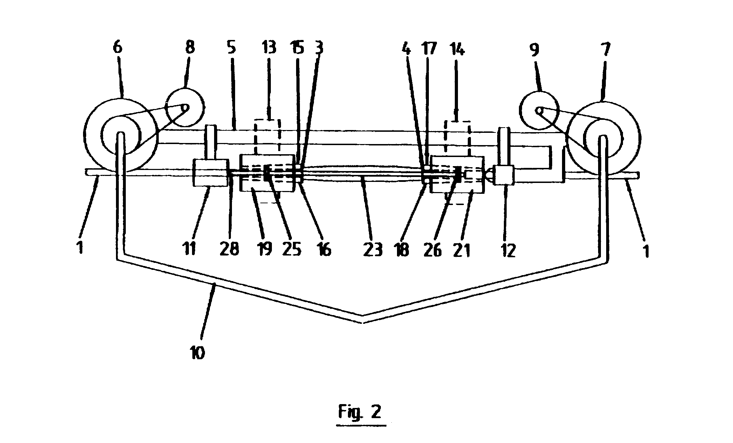

In figure 1 and 2 an electrical high voltage line is marked by 1, a traditional joint by 2 and its ends by 3 and 4. A support 5 comprises two driving wheels 6,7 with the corresponding driving means 8,9. The support is provided with two downwardly diverging guide rail means 10, of which only one is seen in figure 2. A motor means 11 and a bucker means 12 are provided, displaceable horizontally along a portion of the support, which forms a guide rail 5. First and second means 13 and 14 are indicated, but are not shown more in detail, with the function on the one hand to place two pairs of wedge elements 15,16 resp 17,18 and on the other two pairs of wedge socket elements 19,20 resp 21,22 onto the line 1. Of the latter only the wedge socket elements 19 and 21 are seen. Of the two threaded traction elements 23,24 provided, only the former is seen, cooperating with nut elements 25 and 26 to pull together the pairs of wedge socket elements by rotation of the traction elements by motor means 11 and not shown 27. The motor means 11 is shown transferring the torque to the traction means via a shaft with a turned cavity 28. The latter has such dimensions, that it will burst, when a certain, predetermined torque value is achieved, that is to say when the wedge socket elements have pulled the resp pairs of wedge elements around the line, supported by the ends 3 and 4 of the joint.

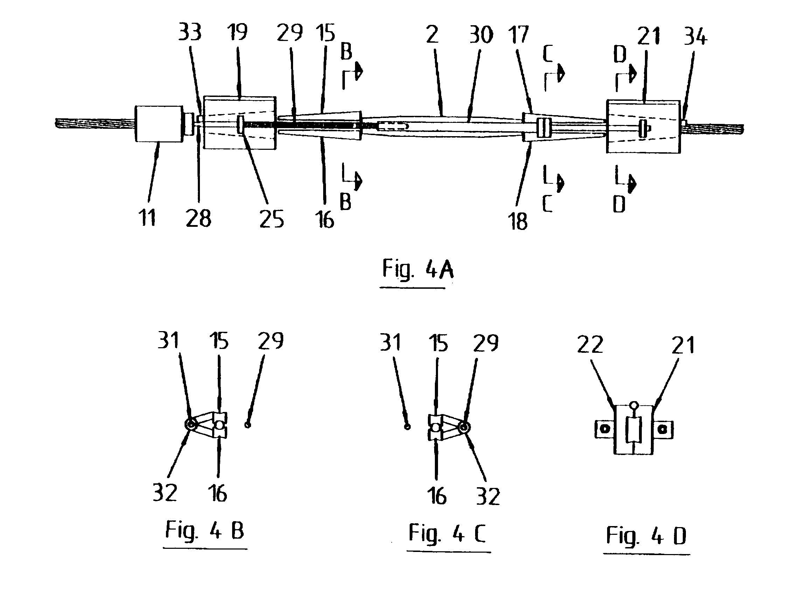

In figure 4 A- 4D details are shown of an embodiment of the device according to the invention, where two traction elements are provided, each comprising a threaded shaft 29,31 and a pipe socket, internally threaded, of which only one is shown marked 30. The shaft 29 thus cooperates with nut means 25 in the wedge socket means 19 and the pipe socket 30, which is attached to the wedge socket element 21. From the figures 4B and 4C the form of the wedge elements 15,16 and their hinge 32 is seen, directed in their longitudinal direction, around which they are journalled.

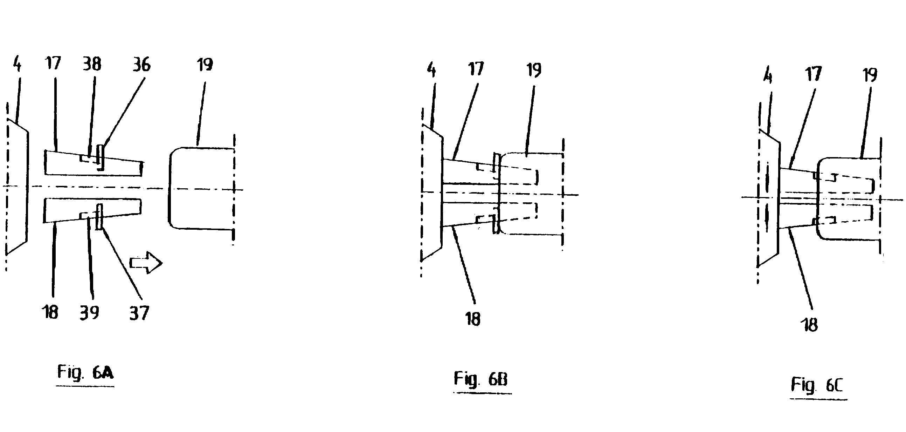

The wedge socket elements 21 and 22 are shown in cross section in figure 4D and more in detail in figures 5a and 5B. These wedge socket elements are joined by a hinge 35 in their longitudinal direction, around which they are mutually journalled. Figure 5A shows the wedge socket elements in open position, whilst figure 5B shows the same surrounding the line 11 with the wedge elements 17,18 inserted. A distance element 34 is used to localize the wedge socket elements 21,22 at the correct height above the line, so that the wedge elements 17,18 can be surrounded. In figure 4A a corresponding distance element 33 is shown for the wedge socket elements 19,20.

In the figures 6A - C the wedge elements 17,18 are shown, provided with guide pins 36,37, able to be countersunk into recesses 38,39. The line 1 has been omitted from the figure, but is present between the wedge elements. The function is, that when the wedge socket elements 19 (and 20, not shown) are led towards the wedge elements, the guide pins cause the wedge elements to be led towards the end 4 of the joint, to be countersunk into the recesses 38 and 39.

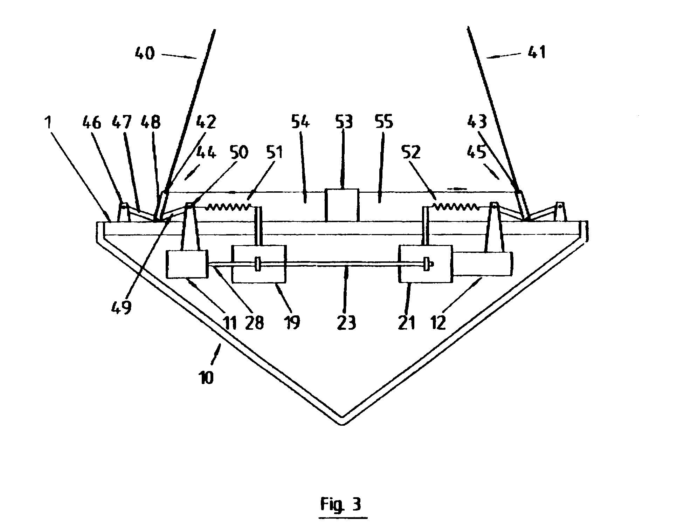

Figure 3 shows an embodiment of the device according to the invention, where the support 1 is provided to be lifted by a lifting device, not shown, via two line elements 40,41. These are fastened in each its lifting point 42,43 in a first and second position means 44,45. The first position means comprises a hinge 46, fixed to the support 1, a first link arm 47, a plate 48, a second link arm 49 and a hinge 50, fixed to the motor means 11. The other position means is built in the same way. The position means are shown in a position broken downwardly, whereas the motor means 11 is in contact with the traction means 23 and the bucker means 12 is pressing against the wedge socket means 21. Spring elements 51 and 52 strive to keep the wedge socket elements 19,21 at a desired mutual distance. An electrically, remotely controlled locking element 53, comprising beam elements 54,55 lock the position means in this position, so that the device can be lifted by the lines 40,41 without change of the mutual positions of the motor means 11 and the bucker means. The function now is, that the device is lifted into one starting position, with the joint within the distance between the wedge socket elements 19,21 where also the wedge elements, not shown, shall have place on each side of the joint. The lifting means is lowered, so that the lines lose their traction ability, whereafter the locking means 53 is unlocked. The motor means 11 pulls the wedge socket elements together via the traction element 23, and thus also the wedge elements, until said torque limiter, that is to say the turned cavity 28 is broken. When the lines 40 and 41 are lifted, the position means 44,45 will pull apart the motor means 11 and the bucker means 12, so that the device can be lifted from the line, leaving the completed shunt joint.

If a helicopter is used as a lifting device this will fly in position with the device lifted by the lines 40,41, and places the device in the vicinity or the defective joint. When the device has a suitable position to the line, the helicopter lowers a few meters so that the device will rest upon the line. The lines and a, not shown, suitably utilized optical fibre cable for communication between the helicopter and the device is then unloaded. The device is given an impulse to be driven via the driving wheel or the driving wheels to take a position with the joint comprised, as mentioned above. Suitably there is a, not shown, video camera with the aid of which the helicopter operator can observe the position of the joint in relationship to the device. The device is then given an impulse to be lowered until said distance elements give the wedge socket elements the correct vertical position in relationship to the line. The wedge socket elements are closed around the line, as has been shown in figures 5a and 5B. This is done by said second means in the form of linear motors. Ther wedge elements are closed around the line by said first means, also in the form of linear motors. The completion of these moments is checked partly by electrical sensors, not shown, which report to the helicopter operator, and partly by optical control, performed by suitably positioned video cameras, not shown, by the helicopter operator. When the movements have been performed safely, the motor means 11 is started according to what is mentioned above, so that wedge socket means and wedge elements are pulled together to a firm bond against the end of the joint on the line at each side of the joint. The traction element, or usually the two traction elements thus function as a shunt line.

When the completing joint is ready, the device is lifted away, whereas the position means 44 and 45, shown in figure 3, pull the motor means 11 and the bucker means 12 apart, so that the device can be lifted away. Said locking means 53 is positioned in the beginning of the operation cycle and can be in locked or unlocked position, as has been described above. This locking means and said position means make it possible, that the device can be lifted from the line in any position, if this should be necessary.

## Claims

1. A method for automatic completion of a socket joint in a line (1) for electrical high voltage with an additional joint in the form of a shunt, comprising the following steps:
a) a first support (5), comprising at least one driving wheel (6,7) and a remotely controlled driving means (8,9) for driving of said wheel, is lifted by a lifting device, such as a crane or helicopter, to engage the line,
b) first means (13) in the support (5) is remotely controlled for placing at least first and second wedge elements (15,16;17,18) to engage respective ends of said socket joint,
c) second means (14) in the support (5) is remotely controlled for placing first and second wedge socket elements (19,20; 21,22) at least partly surrounding said line, cooperating with respective wedge elements (15,16;17,18),
d) at least one traction element (23,24) is acted upon, by remote control of a motor means (11) in the support (5) to pull together the wedge socket elements with the wedge elements surrounded by them, to be fixed, locking, around the line at each side of the socket joint.

2. A method according to claim 1,
characterised in that the device is guided to engagement of said driving wheel (6,7) with the line by guide rail means (10) at the support (5).

3. A method according to claim 1 or 2,
characterised in that by remote control a locking means (53,54,55) preferably with at least partly electrical function, is acted upon to lock the motor means (11), displaceable horizontally along a guide rail fixed to the support, and a bucker means (12) provided displaceable horizontally along the guide rail, in chosen mutual positions along said guide rail.

4. A device for automatic completion of a socket joint in a line (1) for electrical high voltage with an additional joint in the form of a shunt, comprising a first support (5), adapted to be lifted by a lifting means, such as a crane or a helicopter, further comprising at least one driving wheel (6,7) to engage the line, a driving means (8,9) for driving said wheel, the support being provided with first means (13) for placing at least first and second wedge elements (15,16;17,18) to engage respective ends of said socket joint, the support (5) also comprising second means (14) for placing first and second wedge socket elements (19,20;21,22), at least partly surrounding said line, cooperating with respective wedge elements (15,16;17,18), motor means (11), at least one traction element (23,24) being provided to pull together, when acted upon by the motor means (11), the wedge socket elements with the wedge elements surrounded by them, to be fixed, locking, around the line at each side of the socket joint, and communication means for remote control of the driving means, said first and second means and the motor means.

5. A device according to claim 4,
characterized in that the support (5) is provided with guide rail means (10) for guiding the device to engagement of said driving wheel (6,7) with the line.

6. A device according to claim 4 or 5,
characterized in that said motor means (11) is displaceable horizontally along a guide rail fixed to the support, a bucker means (12) being provided, displaceable horizontally along the guide rail.

7. A device according to claim 6,
characterized by a remote controlled locking means (53,54,55) preferably with at least partly electrical function, acted upon to lock the motor means (11) and the bucker means (12) in chosen mutual positions along said guide rail.

8. A device according to claim 7,
characterized in that first and second position means (44,45) are provided, connected to respective lifting points, arranged to be lifted by said lifting device, preferably via respective line means (40,41), the first position means being provided to pull, when its lifting point is pulled, the motor means in the direction from the bucker means, the second position means being provided to pull, when its lifting point is pulled, the bucker means in the direction from the motor means.

9. A device according to any of claims 4 to 8, characterised in that it comprises two pairs of each two wedge elements.

10. A device according to any of claims 4 to 9,
characterized in that the wedge elements in each pair are formed to be joined, journalled around a hinge (32) parallel to their longitudinal direction.

11. A device according to claim 10,
characterized in that said hinge (32) is connected to said traction element.

12. A device according to any of claims 4 to 11, characterized in that it comprises two pairs of each two wedge socket elements.

13. A device according to claim 12,
characterised in that the wedge socket elements in each pair are formed to be joined, journalled around a hinge (35) parallel to their longitudinal direction.

14. A device according to any of claims 4 to 13,
characterised in that it comprises two traction elements (23,24).

## Patentansprüche

1. Verfahren zur automatischen Komplettierung von einem Manschettenverbinder in einer Leitung (1) für elektrische Hochspannung mit noch einem Verbinder in der Form eines Nebenschlusses, das die folgenden Stufen umfasst:
a) ein erstes Stativ (5), wenigstens ein Triebrad (6,7) und ein ferngesteuertes treibendes Organ (8,9) zum Treiben vom genannten Rad umfassend, wird von einem hebenden Organ wie einem Kran oder Helikopter gehoben, um mit der Leitung zum Anliegen zu kommen,
b) ein erstes Organ (13) bei dem Stativ (5) wird ferngesteuert um wenigstens ein erstes und ein zweites Keilelement (15,16,17,18) in Kontakt mit je einem Ende des genannten Manschettenverbinders zu bringen,
c) ein zweites Organ (14) bei dem Stativ (5) wird ferngesteuert um ein erstes und ein zweites Keilbuchsenelement (19,20,21,22) in eine Lage zu bringen, wenigstens teilweise die genannte Leitung umfassend, mit je einem Keilelement (15, 16, 17,18) zusammenwirkend,
d) wenigstens ein Ziehelement (23,24) wird von einem ferngesteuerten Motororgan am Stativ (5) bewirkt, die Keilbuchsenelemente zusammenzuziehen, mit den Keilelementen ihnen umgebend, um schliessend um die Leitung bei der beiden Seiten des Manschettenverbinders befestigt zu werden.

2. Verfahren nach Anspruch 1,
dadurch gekennzeichnet
dass die Vorrichtung zum Anliegen des Triebrades (6,7) mit der Leitung mittels eines Schienenorgans (10) am Stativ (5) gesteuert wird.

3. Verfahren nach Anspruch 1 oder 2,
dadurch gekennzeichnet,
dass ein ferngesteuertes Schliessorgan (53,54,55), vorzugsweise wenigstens teilweise mit elektrischer Wirkung, bewirkt ist, das Motororgan (11) entlang einer Steuerschiene, am Stativ befestigt, wagerecht verschiebbar, zu schliessen, und einen Gegenhalter (12), entlang der Steuerschiene wagerecht verschiebbar, in gewählten gegenseitigen Lagen.

4. Vorrichtung zur automatischen Komplettierung von einem Manschettenverbinder in einer Leitung (1) für elektrische Hochspannung mit noch einem Verbinder in der Form eines Nebenschlusses, das folgendes umfasst: ein erstes Stativ (5) eingerichtet, von einem hebenden Organ wie einem Kran oder Helikopter gehoben zu werden, dazu umfassend wenigstens ein Triebrad (6,7) zum Anliegen mit der Leitung,
ein treibendes Organ (8,9) zum Treiben vom genannten Rad, wobei das Stativ mit einem ersten Organ (13) versehen ist, um wenigstens ein erstes und ein zweites Keilelement (15,16,17,18) in Kontakt mit je einem Ende des genannten Manschettenverbinders zu bringen, wobei das Stativ (5) noch mit einem zweiten Organ (14) versehen ist, um ein erstes und ein zweites Keilbuchsenelement (19,20,21,22) in eine Lage zu bringen, wenigstens teilweise die genannte Leitung umfassend, mit je einem Keilelement (15,16,17,18), und dem Motororgan (11) zusammenwirkend, wobei wenigstens ein Ziehelement (23,24) vorgesehen ist, um bei Wirkung des Motororgans (11) die Keilbuchsenelemente zusammenzuziehen, von den Keilelementen umgegeben, um schliessend um die Leitung bei den beiden Seiten des Manschettenverbinders befestigt zu werden, und ein Verbindungsorgan für Fernsteuerung des treibendes Organs, des genannten ersten und zweiten Organs und des Motororgans.

5. Vorrichtung nach Anspruch 4,
dadurch gekennzeichnet,
dass das Stativ (5) mit einem Steuerschienenorgan (10) versehen ist, um die Vorrichtung zum Anliegen des Triebrads (6,7) mit der Leitung zu bringen.

6. Vorrichtung nach Anspruch 4 oder 5,
dadurch gekennzeichnet,
dass das genannte Motororgan (11) entlang einer Steuerschiene, bei dem Stativ befestigt, wagerecht verschiebbar ist, wobei ein Gegenhalter (12) vorgesehen ist, entlang der Steuerschiene wagerecht verschiebbar.

7. Vorrichtung nach Anspruch 6,
dadurch gekennzeichnet,
dass ein ferngesteuertes Schliessorgan (53,54,55) vorzugsweise wenigstens teilweise mit elektrischer Wirkung, vorgesehen ist, das das Motororgan (11) und den Gegenhalter (12) bewirkt, in gewählte Lagen entlang der genannten Steuerschiene zu schliessen

8. Vorrichtung nach Anspruch 7,
dadurch gekennzeichnet,
dass ein erstes und ein zweites Lageorgan (44,45) vorgesehen sind, verbunden mit je einem Hebepunkt, der von dem genannten hebenden Organ zu heben vorgesehen ist, vorzugsweise mittels je eines Seilorgans (40,41), wobei das erste Lageorgan vorgesehen ist, das Motororgan vom Gegenhalter entfernend zu ziehen, wenn dessen Hebepunkt gezogen wird, wobei das zweite Lageorgan vorgesehen ist, den Gegenhalter vom Motororgan entfernend zu ziehen, wenn dessen Hebepunkt gezogen wird,

9. Vorrichtung nach einem der Ansprüche 4 bis 8,
dadurch gekennzeichnet,
dass zwei Paare von Keilelementen vorgesehen sind.

10. Vorrichtung nach einem der Ansprüche 4 bis 9,
dadurch gekennzeichnet,
dass die Keilelemente in jedem Paar dazu ausgebildet sind, vereint zu werden, um ein Gelenk (32) gelagert, parallel zu deren Längsrichtung.

11. Vorrichtung nach anspruch 10,
dadurch gekennazeichnet,
dass das genannte Gelenk (32) mit dem genannten Ziehelement verbunden ist

12. Vorrichtung nach einem der Ansprüche 4 bis 11,
dadurch gekennzeichnet,
dass zwei Paare von je zwei Keilbuchsenelementen vorgesehen sind.

13. Vorrichtung nach Anspruch 12,
dadurch gekennzeichnet,
dass die Keilbuchsenelemente in jedem Paar vorgesehen sind, vereint zu werden, um ein Gelenk gelagert (35) parallel zu deren Längsrichtung

14. Vorrichtung nach einem der Ansprüche 4 bis 13,
dadurch gekennzeichnet,
dass zwei ziehelemente (23,24) vorgesehen sind.

## Revendications

1. Procédé pour compléter automatiquement un raccord à manchons dans une ligne (1) pour une haute tension électrique avec un raccord additionnel sous la forme d'un shunt, comprenant les étapes suivantes :
a) on soulève à l'aide d'un dispositif de levage, tel qu'une grue ou un hélicoptère, un premier support (5) comprenant au moins une roue d'entraînement (6, 16) et des moyens d'entraînement (8, 9) télécommandés pour entraîner ladite roue, de manière à l'appliquer contre la ligne,
b) des premiers moyens (13) situés dans le support (5) sont télécommandés pour placer au moins des premier et second éléments en forme de coins (15, 16 ; 17, 18) de manière à les appliquer contre des extrémités dudit raccord à manchons,
c) des seconds moyens (14) situés dans le support (5) sont télécommandés pour placer des premier et second éléments de manchons en forme de coins (19, 20 ; 21, 22) entourant au moins partiellement ladite ligne et coopérant avec des éléments en forme de coins respectifs (15, 16 ; 17, 18),
d) au moins un élément de traction (24, 24) est actionné par télécommande de moyens formant moteur (11) dans le support (5) pour serrer ensemble les éléments de manchons en forme de coins, avec les éléments en forme de coins entourés par ces éléments, afin de les fixer, avec blocage, autour de la ligne de chaque côté du raccord à manchons.

2. Procédé selon la revendication 1, caractérisé en ce que le dispositif est guidé de manière à amener ladite roue d'entraînement (6, 7) à s'appliquer contre la ligne par des moyens formant rail de guidage (10) au niveau du support (5).

3. Procédé selon la revendication 1 ou 2, caractérisé en ce que, par télécommande, des moyens de blocage (53, 54, 55), qui possèdent de préférence une fonction au moins partiellement électrique, agissent de manière à bloquer les moyens formant moteur (11), déplaçables horizontalement le long d'un rail de guidage fixé au support, et des moyens de butée (12) prévus de manière à être déplaçable horizontalement le long du rail de guidage, dans des positions réciproques choisies le long dudit rail de guidage.

4. Dispositif de réalisation automatique d'un raccord à manchons dans une ligne (1) pour une haute tension électrique avec un raccord additionnel sous la forme d'un shunt, comprenant un premier support (5) adapté pour être soulevé par des moyens de levage, tels qu'une grue ou un hélicoptère, comportant en outre au moins une roue d'entraînement (6, 7) destinée à s'appliquer contre la ligne, des moyens d'entraînement (8, 9) pour entraîner ladite roue, le support étant pourvu de premiers moyens (13) pour amener au moins des premier et second éléments en forme de coins (15, 16 ; 17, 18) à s'appliquer contre des extrémités respectives dudit raccord à manchons, le support (5) comprenant également des seconds moyens (14) pour placer des premier et second éléments de manchons en forme de coins (19, 20 ; 21, 22), entourant au moins partiellement ladite ligne, et coopérant avec des éléments en forme de coins respectifs (15, 16 ; 17, 18), des moyens formant moteur (11), au moins un élément de traction (23, 24) étant prévu pour serrer ensemble, lorsqu'il est actionné par les moyens formant moteur (11), les éléments de manchons en forme de coins, avec les éléments en forme de coins entourés par ces éléments, afin de les fixer, avec blocage, autour de la ligne de chaque côté du raccord à manchons, et des moyens de communication pour télécommander les moyens d'entraînement, lesdits premiers et seconds moyens et les moyens formant moteur.

5. Dispositif selon la revendication 4, caractérisé en ce que le support (5) est équipé de moyens formant rail de guidage (10) pour guider le dispositif de manière à appliquer ladite roue d'entraînement (6, 7) contre la ligne.

6. Dispositif selon la revendication 4 ou 5, caractérisé en ce que lesdits moyens formant moteur (11) sont déplaçables horizontalement le long d'un rail de guidage fixé au support, des moyens de butée (12) étant prévus de manière à être déplaçables horizontalement le long du rail de guidage.

7. Dispositif selon la revendication 6, caractérisé par des moyens de blocage télécommandés (53, 54, 55) ayant de préférence une fonction au moins partiellement électrique et activés de manière à bloquer les moyens formant moteur (11) et les moyens de butée (12) dans des positions réciproques choisies le long dudit rail de guidage.

8. Dispositif selon la revendication 7, caractérisé en ce que sont prévus des premiers et seconds moyens de positionnement (44, 45), qui sont raccordés à des points de levage respectifs, agencés pour être soulevés par ledit dispositif de levage, de préférence par l'intermédiaire de moyens en forme de câbles respectifs (40, 41), les premiers moyens de positionnement étant prévus pour activer, lorsque leur point de levage est tiré, les moyens formant moteur dans la direction partant des moyens de butée, les seconds moyens de positionnement étant prévus de manière à tirer, lorsque leur point de levage est tiré, les moyens de butée dans la direction s'écartant des moyens formant moteur.

9. Dispositif selon l'une quelconque des revendications 4 à 8, caractérisé en ce qu'il comprend deux couples comprenant chacun deux éléments en forme de coins.

10. Dispositif selon l'une quelconque des revendications 4 à 9, caractérisé ce que les éléments en forme de coins de chaque couple sont formés de manière à être réunis, en étant tourillonnés autour d'une charnière (32) parallèle à leur direction longitudinale.

11. Dispositif selon la revendication 10, caractérisé en ce que ladite charnière (32) est raccordée audit élément de traction.

12. Dispositif selon l'une quelconque des revendications 4 à 11, caractérisé en ce qu'il comporte deux couples comprenant chacun deux éléments formant manchons en forme de coins.

13. Dispositif selon la revendication 12, caractérisé en ce que les éléments formant manchons en forme de coins de chaque couple sont formés de manière à être réunis en étant tourillonnés autour d'une charnière (35) parallèle à leur direction longitudinale.

14. Dispositif selon l'une quelconque des revendications 4 à 13, caractérisé en ce qu'il comporte deux éléments de traction (23, 24).
